# EUROPEAN PATENT APPLICATION

(11) **EP 1 790 945 A1**
(43) Date of publication of application: **30.05.2007**
(21) Application number: 05783145.5
(22) Date of filing: 14.09.2005
(51) Int. Cl.: G01C 21/00, G08G 1/0969

(54) **ROUTE GUIDANCE DEVICE**

(30) Priority: 15.09.2004 JP 2004267960
(71) Applicant: MATSUSHITA ELECTRIC INDUSTRIAL CO., LTD., Osaka 571-8501 (JP)
(72) Inventor: INUKAI, Yu c/o Matsushita Electric Ind. Co., Ldt, Osaka-shi, Osaka540-6319 (JP)
(74) Representative: Pautex Schneider, Nicole Véronique
(86) International application number: PCT/JP2005/016955
(87) International publication number: WO 2006/030833

(57) **Abstract**

Includes a map information storage unit (4) having map information stored therein; an input unit (6) for inputting a destination; a route information control unit (7) for acquiring supplementary route information corresponding to the destination from outside; a supplementary route information storage unit (10) for storing supplementary route information; a joint point setting unit (11) for setting a coordinate set on a road close to a start point coordinate set of the route included in the supplementary route information as a termination point of a route to be retrieved based on the map information stored in the map information storage unit (4); a route search unit (8) for searching for a route to the termination point set by the joint point setting unit (11); and a route guidance control unit (12) for controlling route guidance based on the route retrieved by the route search unit (8) and route guidance based on the supplementary route information acquired by the route information acquisition unit (7) to be performed continuously, so as to perform continuous route guidance to the destination.

## Description

### TECHNICAL FIELD

The present invention relates to a route guidance device for performing route guidance by setting a route on map data.

### BACKGROUND ART

A known conventional route guidance device includes a storage medium having map data stored thereon. When the map data stored on the storage medium does not have coordinate set data corresponding to destination information such as the name of the region, the telephone number or the like which has been input by the user, the route guidance device acquires coordinate set data corresponding to the destination information from an external database using a communication device, and sets the acquired coordinate set data for the destination and thus searches for a route (see, for example, patent document 1).
Patent document 1: Japanese Laid-Open Patent Publication No. 2002-286479

### DISCLOSURE OF THE INVENTION

### PROBLEMS TO BE SOLVED BY THE INVENTION

Such a conventional route guidance search device merely acquires coordinate set data of the destination and searches for the route. Therefore, when the map data storage medium of the device does not have road data to the destination, the device can retrieve a route to a node on the road in the vicinity of the destination as the termination point, but cannot retrieve a route from the termination point to the destination. As a result, the device cannot perform route guidance to the destination from the node on the road in the vicinity of the destination.

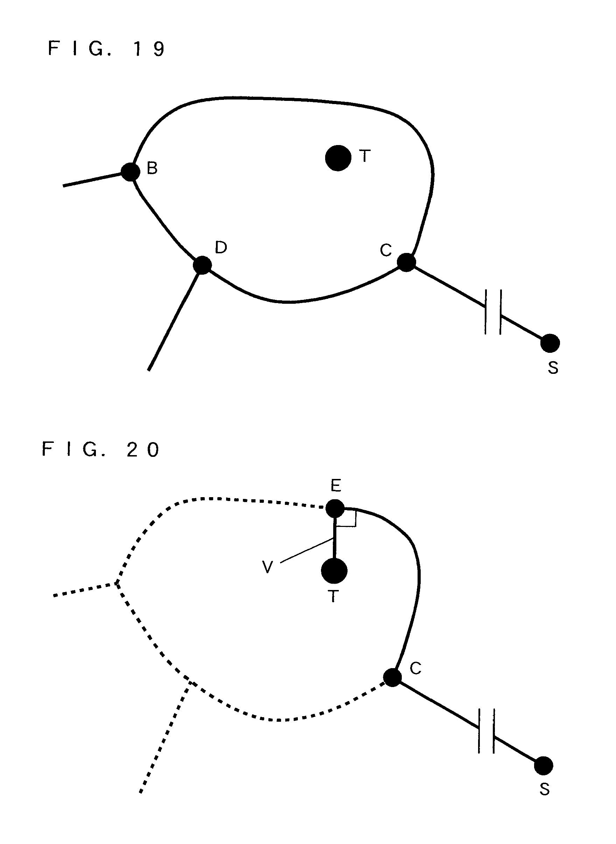

This will be described with reference to FIG. 19 and FIG. 20.

FIG. 19 is an exemplary view showing actual roads. The solid lines represent the roads, S represents the start point, T represents the termination point, and B, C and D represent a branching point. FIG. 20 shows route guidance provided by the above-described conventional route guidance search device. The solid line represents the route provided by the conventional route guidance.

The conventional device shows the route to the destination T from a node on the actual road in the vicinity of the destination T with straight line V because the acquired coordinate set data does not have road data to the destination T. Thus, the conventional device can perform route guidance from the start point S via the branching point C to a node E, at which the road in the vicinity of the destination T crosses the vertical line V, but has the problem of not being capable of performing route guidance from the node E to the destination T because there is no road.

An object of the present invention for solving the above-described conventional problem is to provide a route guidance device for, even when a route to the destination cannot be set by road data possessed by the route guidance device, acquiring route information in the vicinity of the destination as supplementary route information from outside, and connecting the road data possessed by the route guidance device and the acquired supplementary route information to retrieve a route to the destination, so as to provide continuous route guidance to the destination.

### SOLUTION TO THE PROBLEMS

A route guidance device according to the present invention comprises map information storage means having map information stored therein; supplementary route information storage means for storing supplementary route information which represents a route to a destination and which is not included in the map information; supplementary route information acquisition means for acquiring the supplementary route information from the supplementary route information storage means; joint point setting means for setting a coordinate set which is close to a start point coordinate set of the route included in the supplementary route information and is on a road included in the map information as a termination point of a route to be retrieved based on the map information stored in the map information storage means; route search means for searching for a route to the termination point set by the joint point setting means based on the map information; and route guidance control means for performing route guidance based on the route retrieved by the route search means and performing route guidance based on the supplementary route information acquired by the supplementary route information acquisition means.

Owing to this structure, even when the route information to the destination is not possessed, a route which is continuous to the acquired supplementary route information is retrieved by search and continuous route guidance to the destination can be performed.

A route guidance device according to the present invention may further comprise current position detection means for detecting a current position; and the supplementary route information acquisition means may acquire the supplementary route information when the current position detected by the current position detection means fulfills a predetermined condition.

Owing to this structure, even when the device does not have route information to the destination, a supplementary route is acquired during the route guidance, so that a route which is continuous to the acquired supplementary route information is retrieved by re-search and continuous route guidance to the destination can be performed.

In a route guidance device according to the present invention, the predetermined condition may be that the current position reaches a point within a predetermined distance from the termination point of the route along which guidance is being performed.

Owing to this structure, when the road to reach the destination cannot be found after the current position reaches a point close to the termination point of the route, supplementary route information to the destination can be acquired.

In a route guidance device according to the present invention, the predetermined condition may be that the current position reaches a point within a predetermined distance from a branching point close to the termination point of the route along which guidance is being performed.

Owing to this structure, supplementary route information to the destination is acquired before the current position reaches the branching point close to the termination point of the route along which guidance is being performed. Thus, the current position can be reach the start point of the supplementary route efficiently.

A route guidance device according to the present invention may further comprise external information acquisition means for acquiring supplementary route information to the destination which is possessed by an external device; and the supplementary route information storage means may store the supplementary route information acquired by the external information acquisition means.

Owing to this structure, supplementary route information can be acquired from outside and stored.

In a route guidance device according to the present invention, the external information acquisition means may acquire the supplementary route information from an external device which is at least one of a network server, a telephone terminal and an external storage medium.

Owing to this structure, supplementary route information to the destination can be acquired from a network server, a telephone terminal, an external storage medium or the like which has the supplementary route information.

In a route guidance device according to the present invention, the supplementary route information may include at least data on the start point coordinate set and road information including a node and a link to the start point to the destination.

Owing to this structure, the route guidance means can add the supplementary route data acquired by the external information acquisition means to the original data table on the retrieved route so as to create a route data table to the destination. Thus, route guidance to the destination can be performed.

In a route guidance device according to the present invention, the supplementary route information may include at least data on the start point coordinate set and voice guidance information from the start point to the destination.

Owing to this structure, after the current position reaches the termination point of the retrieved route, the route information control means can perform route guidance to the destination by the acquired voice guidance information.

In a route guidance device according to the present invention, the supplementary route information may include at least data on the start point coordinate set and guide map information from the start point to the destination.

Owing to this structure, after the current position reaches the termination point of the retrieved route, image route guidance to the destination can be performed by displaying the acquired guide map information as being superimposed on the map screen currently displayed.

### EFFECT OF THE INVENTION

A route guidance device according to the present invention, even when a route to the destination cannot be set because the map information possessed by the route guidance device does not include route information to the destination, sets a coordinate set, on the road close to the start point coordinate set of the route included in the supplementary route information acquired from outside, as the termination point of a route to be retrieved based on the map information stored in the map information storage means and thus searches for such a route. Therefore, a route which is continuous to the supplementary route can be retrieved. Thus, the retrieved route and the supplementary route are connected to each other, and continuous route guidance to the destination can be performed.

### BRIEF DESCRIPTION OF THE DRAWINGS

[FIG. 1] FIG. 1 is a block diagram showing functions of a route guidance device according to a first embodiment of the present invention.
[FIG. 2] FIG. 2 is a flowchart illustrating a route search operation performed by the route guidance device according to the first embodiment of the present invention.
[FIG. 3] FIG. 3 illustrates supplementary route information according to the first embodiment of the present invention.
[FIG. 4] FIG. 4 is a flowchart illustrating a supplementary route information acquisition operation performed by the route guidance device according to the first embodiment of the present invention.
[FIG. 5] FIG. 5 is a flowchart illustrating a joint point setting operation performed by the route guidance device according to the first embodiment of the present invention.
[FIG. 6] FIG. 6 shows an exemplary supplementary route provided by the route guidance device according to the first embodiment of the present invention.
[FIG. 7] FIG. 7 shows a joint point setting operation performed by the route guidance device according to the first embodiment of the present invention.
[FIG. 8] FIG. 8 shows another exemplary supplementary route provided by the route guidance device according to the first embodiment of the present invention.
[FIG. 9] FIG. 9 shows a route retrieved by re-search performed by the route guidance device according to the first embodiment of the present invention.
[FIG. 10] FIG. 10 shows an exemplary display of a supplementary route provided by the route guidance device according to the first embodiment of the present invention.
[FIG. 11] FIG. 11 is a block diagram showing functions of a route guidance device according to a second embodiment of the present invention.
[FIG. 12] FIG. 12 shows a route retrieved by re-search performed by the route guidance device according to the second embodiment of the present invention.
[FIG. 13] FIG. 13 is a flowchart illustrating a route guidance operation performed by the route guidance device according to the second embodiment of the present invention.
[FIG. 14] FIG. 14 is a flowchart illustrating a joint point setting operation performed by the route guidance device according to the second embodiment of the present invention.
[FIG. 15] FIG. 15 shows an exemplary display of a supplementary route performed by the route guidance device according to the second embodiment of the present invention.
[FIG. 16] FIG. 16 shows another exemplary display of a supplementary route provided by the route guidance device according to the second embodiment of the present invention.
[FIG. 17] FIG. 17 is a block diagram showing functions of a route guidance device according to a third embodiment of the present invention.
[FIG. 18] FIG. 18 is a flowchart illustrating a route guidance operation performed by the route guidance device according to the third embodiment of the present invention.
[FIG. 19] FIG. 19 shows actual roads used for explaining the route guidance device according to the first embodiment of the present invention.
[FIG. 20] FIG. 20 illustrates a conventional route guidance device.

### DESCRIPTION OF THE REFERENCE CHARACTERS

- 1: GPS receiving unit
- 2: dead-reckoning sensor unit
- 3: current position detection unit
- 4: map information storage unit
- 5: map information acquisition unit
- 6: input unit
- 7, 17: route information control unit
- 8: route search unit
- 9: external information acquisition unit
- 10: supplementary route information storage unit
- 11, 18: joint point setting unit
- 12, 19: route guidance control unit
- 13: image output control unit
- 14: voice output control unit
- 15: image output unit
- 16: voice output unit

### BEST MODE FOR CARRYING OUT THE INVENTION

Hereinafter, a route guidance device according to embodiments of the present invention will be described with reference to the drawings.

### (First Embodiment)

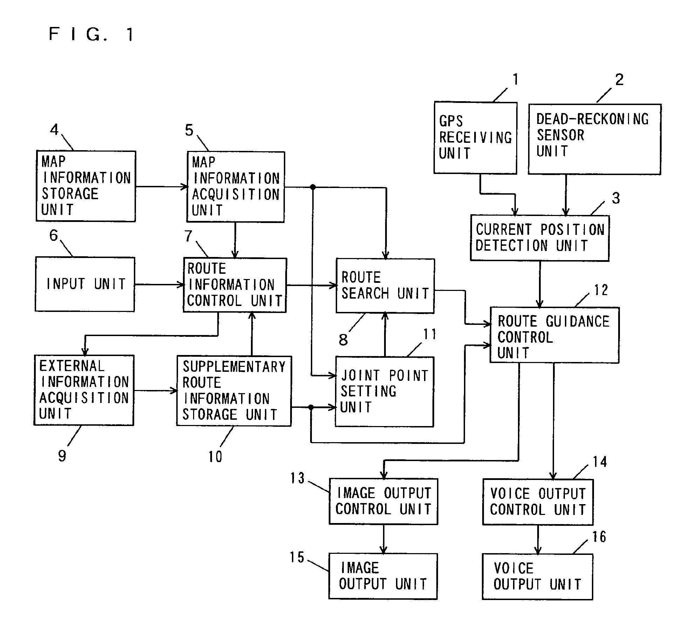

FIG. 1 is a block diagram showing functions of a route guidance device according to a first embodiment of the present invention.

As shown in FIG. 1, the route guidance device according to this embodiment includes a GPS receiving unit 1, an dead-reckoning sensor unit 2, and a current position detection unit 3. The GPS receiving unit 1 receives radio waves from a plurality of GPS satellites via a GPS antenna (not shown). Dead-reckoning sensor unit 2 includes an dead-reckoning sensor including an orientation sensor, a vehicle speed sensor or the like. The current position detection unit 3 detects the current position of the vehicle based on data from the GPS receiving unit 1 and data from the dead-reckoning sensor unit 2.

The route guidance device according to this embodiment further includes a map information storage unit 4, a map information acquisition unit 5 and an input unit 6. The map information storage unit 4 stores map information on a storage medium such as a CD, a DVD or the like. The map information acquisition unit 5 includes a data read device for reading map information from the storage medium in the map information storage unit 4. The input unit 6 includes a keyboard, a remote control or the like operable by a user to input information on the destination, instructions and the like.

The route guidance device according to this embodiment further includes a route information control unit 7 for causing a route search unit 8 to search for a route based on the information on the destination which has been input through the input unit 6 and the map information acquired by the map information acquisition unit 5, and for causing an external information acquisition unit 9 including a wireless telephone function, a LAN device, a modem or the like to acquire supplementary route information.

The route guidance device according to this embodiment also includes a supplementary route information storage unit 10 and a joint point setting unit 11. The supplementary route information storage unit 10 stores supplementary route information acquired from outside by the external information acquisition unit 9 based on an instruction of the route information control unit 7. The joint point setting unit 11 sets, as the termination point of a route to be retrieved by the route search unit 8, a coordinate set of a point on an actual road which corresponds to the start point of the route included in the supplementary route information, based on the supplementary route information stored in the supplementary route information storage unit 10 and the map information acquired by the map information acquisition unit 5.

The route guidance device according to this embodiment also includes a route guidance control unit 12, an image output control unit 13, a voice output control unit 14, an image output unit 15, and a voice output unit 16. The route guidance control unit 12 controls route guidance based on the route retrieved by the route search unit 8 and route guidance based on the supplementary route information after the current position reaches the termination point of the retrieved route to be output as an image and a voice. The image output control unit 13 converts image data from the route guidance control section 12 into an image signal. The image output unit 15 displays the image signal from the image output control unit 13 on a display unit or the like as an image. The voice output control unit 14 converts voice data from the route guidance control unit 12 into an analog and amplifies the analog signal. The voice output unit 16 outputs the voice signal from the voice output control unit 14 via a speaker or the like as a voice so as to perform route guidance.

In this embodiment, the route guidance device includes both the GPS receiving unit 1 and the dead-reckoning sensor 2. Alternatively, the route guidance device may include only either one of these.

In this embodiment, the map information storage unit 4 of the route guidance device includes a storage medium such as a CD, a DVD or the like. Alternatively, the route guidance device may include another storage unit such as an HDD or the like, in which map information may be stored.

The route search unit 8, the joint point setting unit 11 and the route guidance control unit 12 each include a CPU and a RAM for performing controls on the entire device including calculations and controls necessary for route guidance or the like, and a ROM having stored thereon various types of control programs executable by the CPU.

The supplementary route information storage unit 10 can be implemented by a RAM or a ROM. The supplementary route information is preferably stored on an SRAM, the data of which is not erased even when the power of the device is turned off.

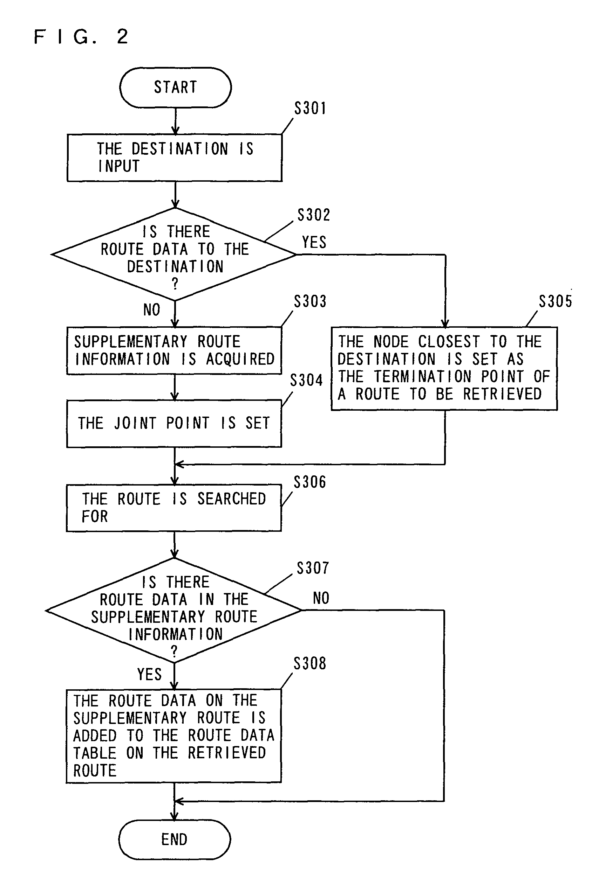

An operation of the route guidance device according to this embodiment having the above structure will be described with reference to FIG. 2, which is a flowchart illustrating a route search operation.

Referring to FIG. 2, when the information on the destination is input through the input unit 6 (S301), the route information control unit 7 determines whether or not the map information storage unit 4 includes the coordinate set of the point corresponding to the input destination (hereinafter, referred to simply as the "destination") and road link data around the destination (S302).

When the map information storage unit 4 includes the coordinate set of the destination and the road link data around the destination (YES in S302), the route information control unit 7 detects a coordinate set of a point on the road link which is closest to the destination based on the map information stored in the map information storage unit 4, and sets the detected coordinate set of the point as the termination point of the route to be retrieved (S305). Then, the route information control unit 7 causes the route search unit 8 to search for such a route to the set termination point (S306).

When the map information storage unit 4 does not include the coordinate set of the destination or the road link data around the destination (NO in S302), the route information control unit 7 acquires supplementary route information corresponding to the input destination from the supplementary route information storage unit 10 (S303).

The supplementary route information acquisition operation in step S303 will be described in detail later.

Next, the joint point setting unit 11 detects a coordinate set of a point on the road link which is closest to the start point of the route included in the supplementary route information acquired by the route information control unit 7 from the supplementary route information storage unit 10, based on the map information stored in the map information storage unit 4. The route information control unit 7 sets the detected coordinate set of the point as the termination point of the route to be retrieved by the route search unit 8 (S304), and causes the route search unit 8 to search for such a route to the set termination point (S306).

The joint point setting operation in step S304 will be described in detail later.

Next, the route guidance control unit 12 determines whether or not the acquired supplementary route information includes route data such as links, nodes or the like (S307). When the acquired supplementary route information does not include the route data such as links, nodes or the like (NO in S307), the route search operation is terminated.

When the acquired supplementary route information includes the route data such as links, nodes or the like (YES in S307), the route guidance control unit 12 extracts the route data such as links, nodes or the like, and adds the extracted route data to a route data table on the route retrieved by the route search unit 8 (S308). Then, the route search operation is terminated.

When the map information storage unit 4 does not include the coordinate set of the destination or the road link data around the destination (NOinS302), the supplementary route information corresponding to the input destination is automatically acquired from the supplementary route information storage unit 10. Alternatively, the user may be allowed to instruct whether or not to acquire the supplementary route information.

The above-mentioned route data table is a register prepared for displaying the route, and stores codes of links, codes, and the like which form the route.

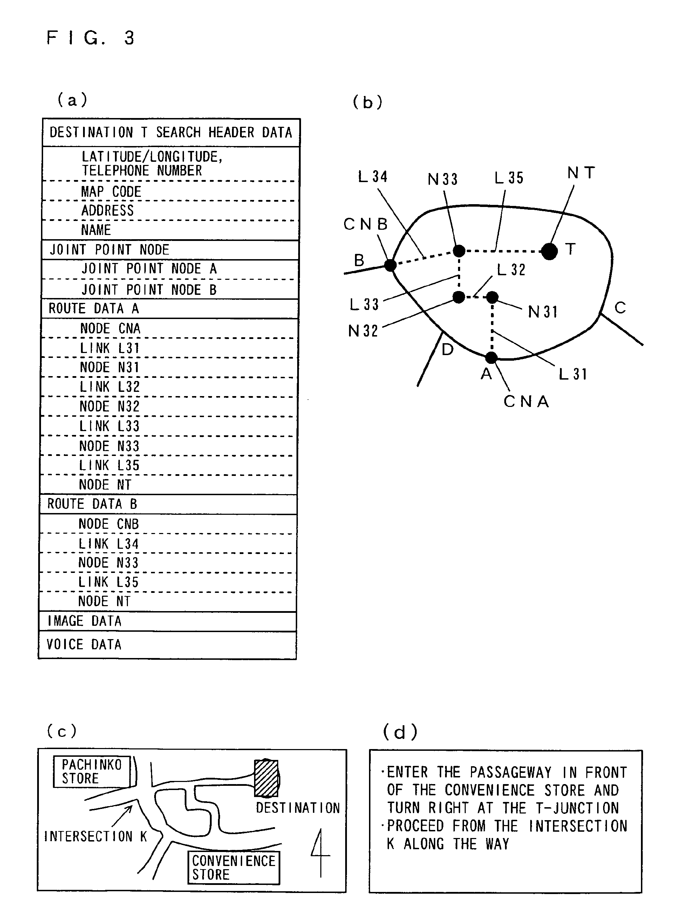

Next, an example of the supplementary route information will be described with reference to FIG. 3 (a) through (d). FIG. 3 (a) shows an exemplary data structure of the supplementary route information to the destination T. FIG. 3(b) shows the correspondence between the route data included in the supplementary route information and the supplementary route. FIG. 3(c) shows image data on the supplementary route information. FIG. 3(d) shows voice data on the supplementary route information.

In the following example, a supplementary route to the road shown in FIG. 19, the data of which is stored in the map information storage unit 4, will be searched for.

As shown in FIG. 3(a), the supplementary route information regarding the destination T has a search header which indicates that the information is regarding the destination T. The destination search header includes data on either one of, or a plurality of, latitude, longitude, telephone number, map code, address, facility name, personal name, and group name. In step S307, it is determined whether or not the supplementary route information having a search header which matches the information on the destination is present in the supplementary route information storage unit 10.

The supplementary route information has joint point node data for connecting the map information and the supplementary route to each other as represented as joint point node A and joint point node B in FIG. 3(a).

The supplementary route information has route data corresponding to each of the joint point nodes. In the example shown in FIG. 3(a), the route data and the supplementary routes have the following relationship as shown in FIG. 3(b). Route data A corresponding to joint point node A is route data from CNA of the joint point A to node NT of the destination T, and includes node CNA, link L31, node N31, link L32, node N32, link L33, node N33, link L35 and node NT. Similarly, route data B corresponding to joint point node B is route data from node CNB of the joint point B to node NT of the destination T, and includes node CNB, link L34, node N33, link L35 and node NT.

Therefore, by adding the route data included in the supplementary route information to the route data table on the retrieved routes from the starting point to the joint point node A and to the joint point node B, the route data to the destination T is created and thus the route guidance becomes possible.

The supplementary route information includes image data shown in FIG. 3(c) and voice data shown in FIG. 3(d), which are both on the supplementary route.

The image data is merely displayed like a bit map, and is used as, for example, a simple guide map to the destination as shown in FIG. 3(c). The voice data is in the WAVE or PCM format, and explains the way from the joint point node A and the joint point B to the destination T in a summarized manner by a voice, for example, as shown in FIG. 3(d).

The above-described supplementary route may include either one of, or a plurality of, route data, image data, and voice data.

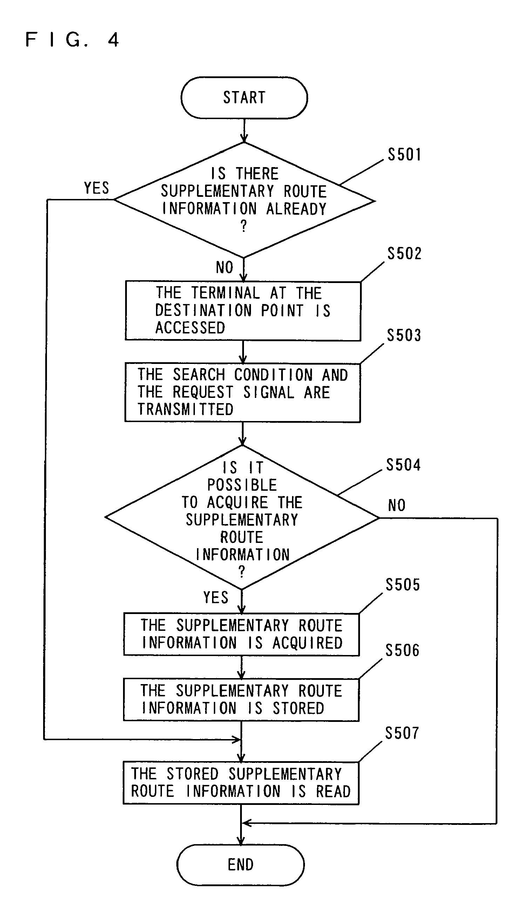

Next, the supplementary route information acquisition operation in step S303 will be described with reference to FIG. 4.

FIG. 4 is a flowchart illustrating the supplementary route information acquisition operation performed by the route guidance device according to this embodiment.

Referring to FIG. 1 and FIG. 4, the route information control unit 7 determines whether or not the supplementary route information storage unit 10 includes supplementary route information corresponding to the destination which has been input through the input unit 6 (S501). When the supplementary route information storage unit 10 includes the supplementary route information (YES in S501), the route information control unit 7 reads the supplementary route information stored in the supplementary route information storage unit 10 (S507).

When the supplementary route information storage unit 10 does not include the supplementary route information corresponding to the destination which has been input through the input unit 6 (NO in S501), the route information control unit 7 provides the access number or the number of the telephone terminal of a network server having the information on the destination which has been input through the input unit 6 (the facility name, personal name, group name, latitude/longitude, address, etc.) and the supplementary route information to the external information acquisition unit 9, and instructs the external information acquisition unit 9 to access the network server. The external information acquisition unit 9 connects the line to the access number received from the route information control unit 7 (S502).

Next, the external information acquisition unit 9 transmits a search condition and a request signal by the protocol with the network server or the telephone terminal (S503), and determines whether or not it is possible to acquire the supplementary route information from the network server or the telephone terminal (S504).

When the supplementary route information cannot be acquired from the network server or the telephone terminal (NO in S504), the external information acquisition unit 9 terminates the supplementary route information acquisition operation.

When the supplementary route information can be acquired from the network server or the telephone terminal (YES in S504), the external information acquisition unit 9 acquires the supplementary route information from outside (S505), and stores the acquired supplementary route information in the supplementary route information storage unit 10 (S506).

Then, the route information control unit 7 reads the stored supplementary route information (S507) and outputs the supplementary route information to the joint point setting unit 11. Then, the supplementary route information acquisition operation is terminated.

In FIG. 4, the supplementary route information is acquired from an external device using a communication line. Alternatively, for example, pre-stored supplementary route information may be read onto a card type storage medium such as an SD card or the like, or supplementary route information may be stored in a storage area for supplementary route information in an internal non-volatile memory and may be read for searching the route, needless to say.

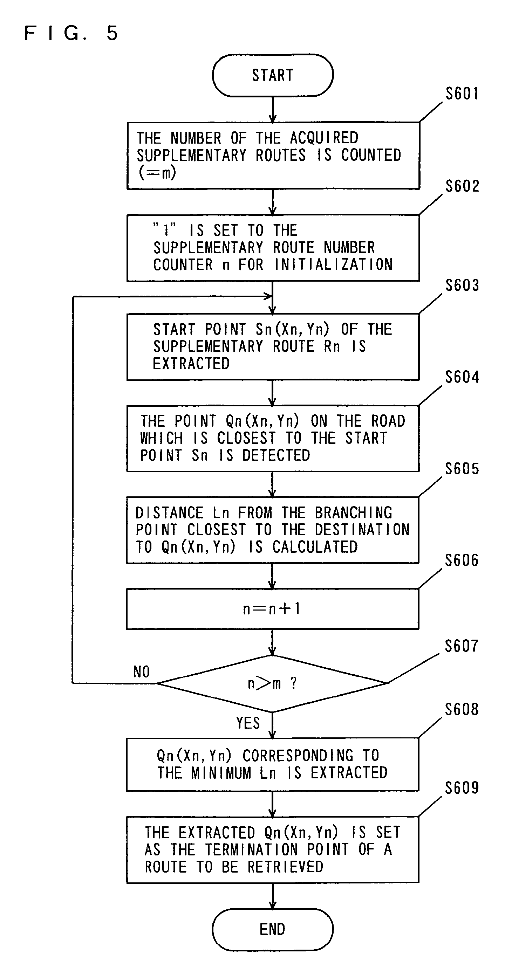

Next, the joint point setting operation in step S304 in FIG. 2 will be described with reference to the flowchart in FIG. 5.

Referring to FIG. 5, first, the joint point setting unit 11 counts the number of supplementary routes acquired when the supplementary route information was acquired, adds an order number of 1 through m (m: the number of the supplementary routes) to each of the supplementary routes (S601), and sets "1" in a supplementary route number counter n for initialization (S602).

Next, the joint point setting unit 11 extracts a start point coordinate set S1(X1, Y1) of the first supplementary route R1 from the acquired supplementary route information (for example, the coordinate set of the position of the destination, the coordinate sets of the start points of the supplementary routes, route data from the start points to the destination including nodes and links, a voice message for route guidance, and map image data representing the routes from the start points to the destination) (S603). Then, the joint point setting unit 11 detects a coordinate set Q1(X1, Y1) of a point, on the map information corresponding to the actual road, which is closest to the extracted start point coordinate set S1(X1, Y1) (S604).

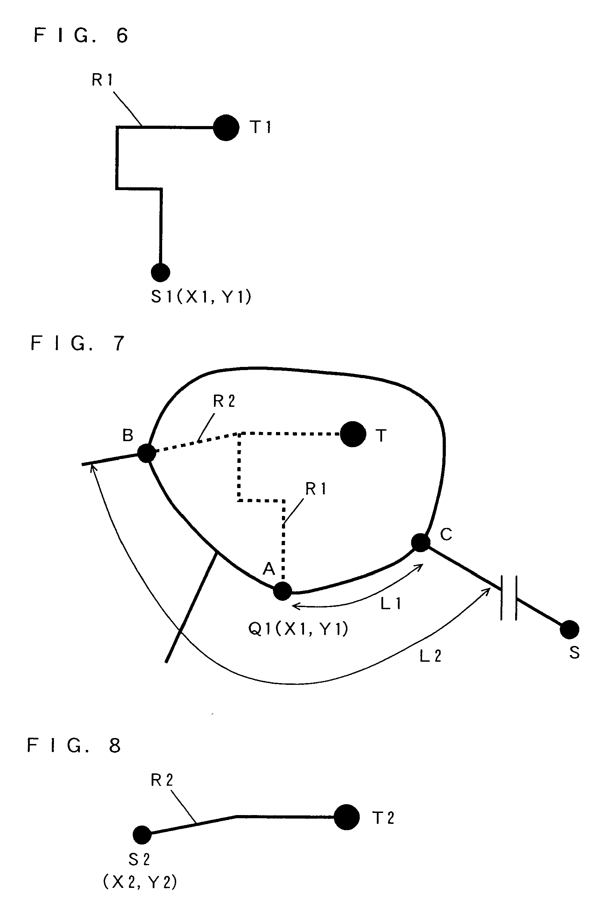

FIG. 6 shows an example of the first supplementary route R1 acquired, which is a route from the start point S1 to a termination point T1. The termination point T1 matches the destination T. FIG. 7 shows the relationship between the supplementary route R1 and the actual roads.

Referring to FIG. 7, the solid lines represent roads which are present in the map information storage unit 4 as data, and the dotted lines represent roads which are not present in the data stored in the map information storage unit 4. Point C represents the branching point which is closest to the destination T in the direction toward the start point S from the destination T. Point A represents the start point of the supplementary route R1, and the supplementary route R1 corresponds to road AT.

Therefore, when the coordinate set S1(X1, Y1) of the start point A of the supplementary route R1 is set on the road link as shown in FIG. 7, the coordinate set Q1 (X1, Y1) of the point on the road closest to the start point A matches point A.

Next, the joint point setting unit 11 calculates and stores a distance L1 from the branching point C which is closest to the destination T to the point coordinate set Q1 (X1, Y1) (point A in FIG. 7) (S605).

Then, the joint point setting unit 11 adds "1" to the supplementary route number countern (S606), and determines whether the value of the supplementary route number counter n is larger or smaller than the number of the supplementary routes m (S607). When the value of the supplementary route number counter n is smaller than the number of the supplementary routes m (NO in S607), the processing returns to step S603 and the joint point setting unit 11 executes the processing in steps S603 through S606 on the next supplementary route R2.

When the value of the supplementary route number counter n is larger than the number of the supplementary routes m (YES in S607), the joint point setting unit 11 extracts the minimum Ln from Ln corresponding to the supplementary routes R1 through Rm, and extracts a point coordinate set Qn (Xn, Yn) corresponding to the extracted minimum Ln (S608).

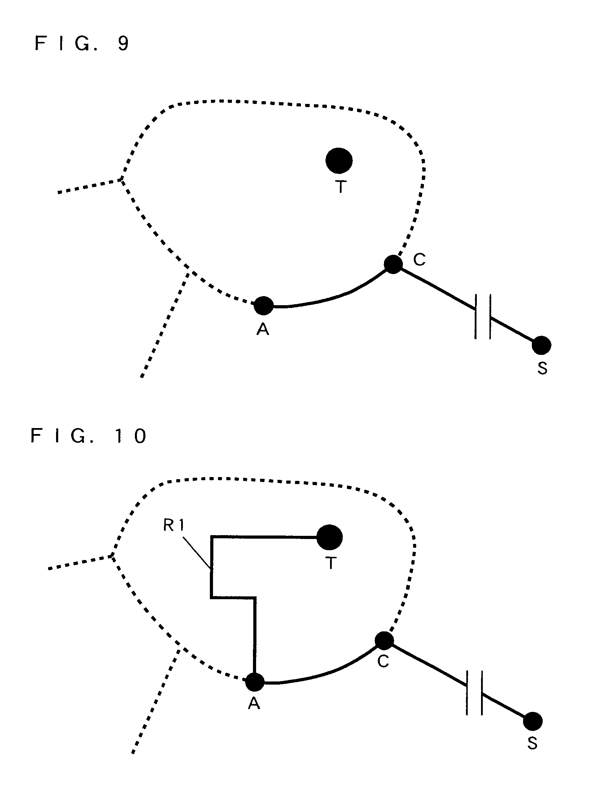

FIG. 8 shows an example of the second supplementary route R2 extracted, which is a route from a start point S2 to a termination point T2. The coordinate set of the termination point T2 matches the coordinate set of the termination point T1, i. e. , the coordinate set of the destination T. Point B represents the start point S2 of the supplementary route R2, and the supplementary route R2 corresponds to road BT. The distance L1 from the branching point C, which is closest to the destination T, to the supplementary route R1 is the distance from point C to point A. A distance L2 from the branching point C to the supplementary route R2 is the distance from point C to point B. In step S608, the distance L1 (route CA) and the distance L2 (route CB) are compared with each other, and the smaller distance L1 (route CA) is extracted.

Next, the joint point setting unit 11 sets the point coordinate set Qn (Xn, Yn) extracted in step S608 (point A in this embodiment) as the termination point of a route to be retrieved by the route search unit 8 (S609). Thus, the joint point setting operation performed by the joint point setting unit 11 is terminated.

In FIG. 9, the thick line represents the route retrieved with point A being set as the termination point of a route to be retrieved. Route SCA is the retrieved route.

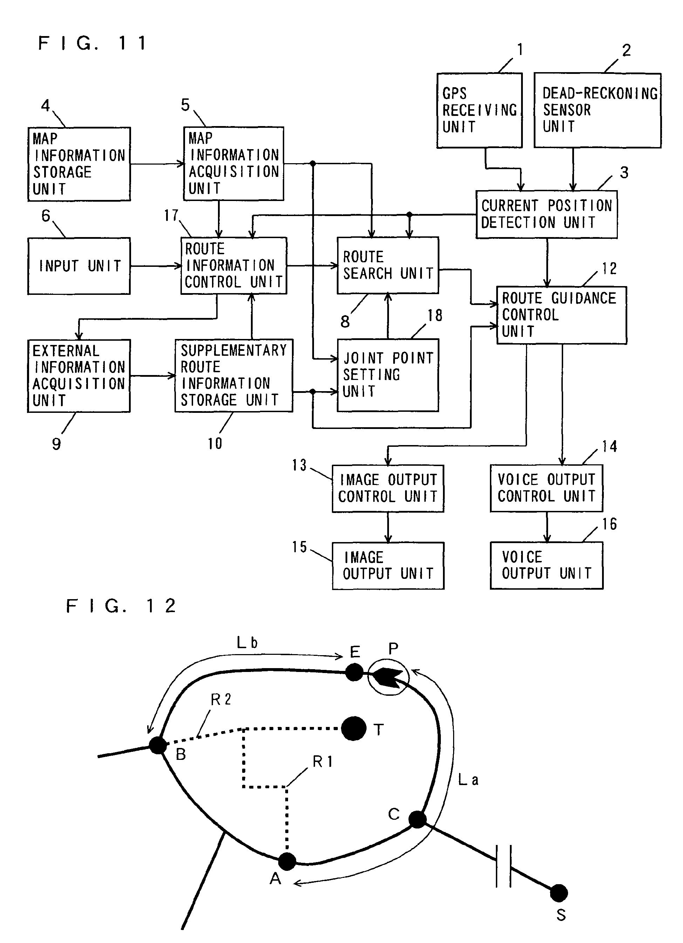

In step S308 in FIG. 2, a route data table obtained by adding the route data on the supplementary route shown in FIG. 6 to a route data table on the route shown in FIG. 9 retrieved by the route search unit 8 is created. As a result, as shown in FIG. 10, the retrieved route SCA and the supplementary route R1 are connected on a display screen of the display device or the like of the image output unit 15, so that continuous route guidance can be displayed.

### (Second Embodiment)

A route guidance device according to a second embodiment of the present invention will be described.

The route guidance device according to this embodiment is structured to acquire supplementary route information after the vehicle runs up to the vicinity of the destination. Unlike the device in the first embodiment, the route guidance device in this embodiment acquires supplementary route information while the guidance is being performed along the route.

FIG. 11 is a functional block diagram of the route guidance device according to the second embodiment of the present invention. Identical elements to those in the first embodiment bear identical reference numerals thereto and descriptions thereof will be omitted.

Referring to FIG. 11, with the route guidance device according to the second embodiment, when it is determined that the current position has reached the termination point of the route based on the detection result of the current position detection unit 3, a route information control unit 17 acquires supplementary route information from outside, and a joint point setting unit 18 selects an optimum supplementary route based on the current position when there are a plurality of supplementary routes stored in the supplementary route information storage unit 10.

The route guidance device according to this embodiment having the above structure will be described with reference to the drawings.

FIG. 12 shows a route provided by so-called re-search, i.e., by searching for a route for the second time in order to acquire supplementary route information after the vehicle runs up to the vicinity of the destination along the route retrieved by search. FIG. 12 shows a state where the vehicle which has started from the point S reaches point E in the vicinity of the destination T via the branching point C. Point P represents the current position of the vehicle.

The point E represents a point (node) on the road link which is closest to the destination T. The point E is set when the route search unit 8 searches for a route. As shown in FIG. 20, the point E is the termination point of route SCE acquired by the conventional search method. Hereinafter, the point E will be referred to the termination point of the route.

In FIG. 12, point A and point B are branching points of the actual roads, and R1 and R2 represent supplementary routes acquired by the external information acquisition unit 9 shown in FIG. 6 and FIG. 8.

In this embodiment, such a situation will be described as an example.

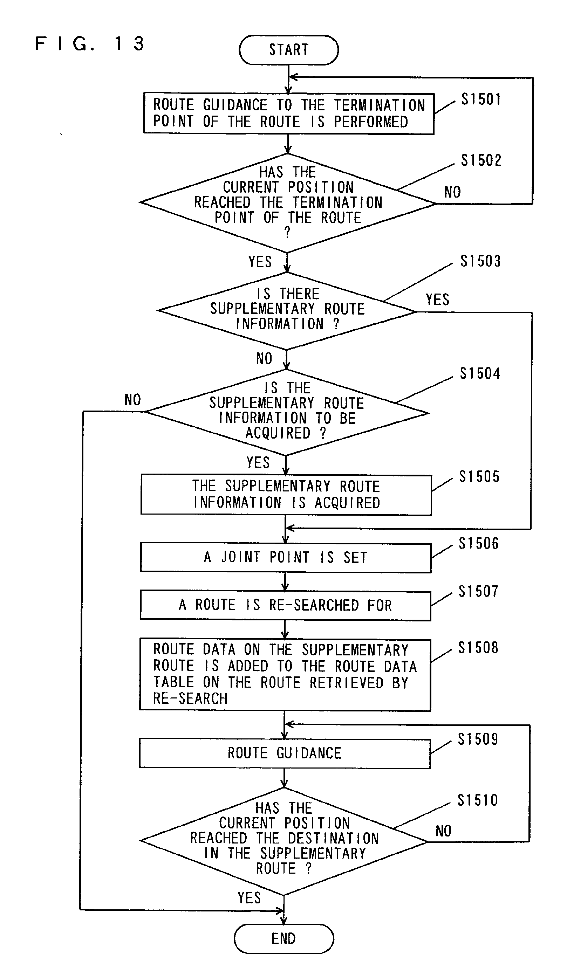

FIG. 13 is a flowchart illustrating a j oint point setting operation performed by the route guide device in this embodiment.

Referring to FIG. 13, until the current position P of the vehicle reaches the termination point E, the route guidance control unit 12 executes the usual route guidance (S1501).

As described above, in FIG. 20, the termination point E is acquired by the conventional method, i.e., by finding an intersection at which the vertical line V to the link from the destination T is shortest. Alternatively, node data on the link close to the destination T may be extracted among node data stored in the map information storage unit 4, and set as the termination point E.

Next, the route guidance control unit 12 determines whether or not the current position P has reached the termination point E of the route (S1502). When the current position P has not reached the termination point E of the route (NO in S1502), the route guidance control unit 12 continues the route guidance. When the current position P has reached the termination point E of the route (YES in S1502), the route guidance control unit 12 determines whether or not the supplementary route information storage unit 10 has supplementary route information (S1503). When the supplementary route information storage unit 10 has the supplementary route information (YES in S1503), the joint point setting unit 18 sets a joint point (S1506).

When the supplementary route information storage unit 10 does not have the supplementary route information (NO in S1503), the external information acquisition unit 9 determines whether or not to acquire the supplementary route information based on an instruction of the user (S1504). When it is determined not to acquire the supplementary route information (NO in S1504), the series of processing is terminated. When it is determined to acquire the supplementary route information (YES in S1504), the external information acquisition unit 9 acquires the supplementary route information from outside (S1505).

By the above-described flow, in the state where although the vehicle has reached the termination point E of the route, a route to the destination is not found because the termination point E of the route which was first set is not continuous to the route to destination T, the user can select whether or not to acquire the supplementary route information.

Next, the joint point setting unit 18 sets a joint point based on the acquired supplementary route information (S1506). For setting a joint point, as in the first embodiment, one supplementary route is selected under a predetermined condition, and the coordinate set Qn (Xn, Yn) of the point on the actual road which is close to the start point of the selected supplementary route is set as the termination point of a route to be retrieved. The joint point setting operation in this embodiment will be described later.

Next, the route search unit 8 re-searches for a route from the termination point E of the route to the termination point Qn (Xn, Yn) which was set in step S1506(S1507), and adds route data on the supplementary route to a route data table on the route retrieved by re-search (S1508). The route guidance control unit 12 performs route guidance to the destination T in accordance with the route data table including the added route data on the supplementary route (S1509).

Then, the route guidance control unit 12 determines whether or not the current position has reached the destination T (S1510). When the current position has not reached the destination T (NO in S1510), the route guidance control unit 12 continues the route guidance. When the current position has reached the destination T (YES in S1510), the route guidance control unit 12 terminates the route guidance.

Next, the joint point setting operation in step S1506 in FIG. 13 will be described.

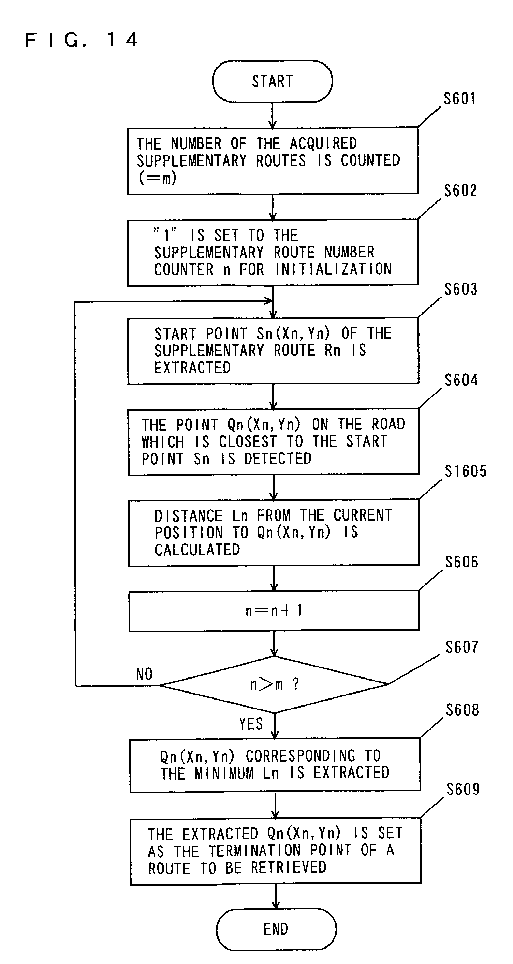

FIG. 14 is a flowchart illustrating the joint point setting operation in this embodiment. The joint point setting operation in this embodiment is the same as the joint point setting operation in the first embodiment shown in FIG. 5 except for step S605, and thus will not be described in detail.

The joint point setting operation in this embodiment and the joint point setting operation in the first embodiment shown in FIG. 5 are different in that the start point of the distance Ln is the branching point closest to the destination T in the first embodiment whereas the start point of the distance Ln is the current position P in this embodiment.

In this embodiment, as shown in FIG. 12, there are two supplementary routes R1 and R2. Point Q1 (X1, Y1) and point Q2(X2, Y2) on the road which are closest to the respective start points S1(X1, Y1) and S2(X2, Y2) are point A and point B. Distance La from the point A to the current position P and distance Lb from the point B to the current position P are calculated in step S1605.

Therefore, in step S608, the smaller of distances La and Lb, i.e., Lb is extracted. In step S609, the point B, i.e., the point Q2(X2, Y2) is set as the termination point of a route to be retrieved, i.e., the joint point with the supplementary route.

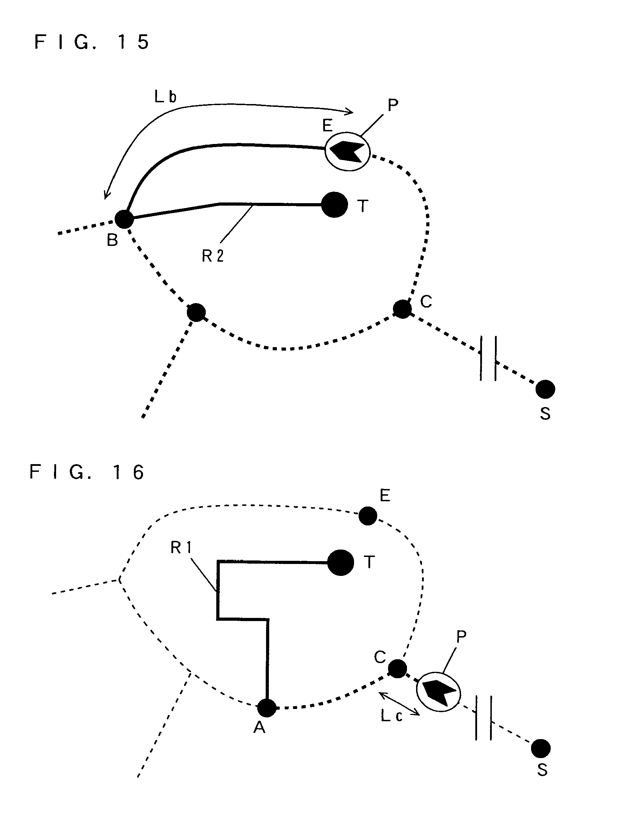

FIG. 15 shows an example of the route retrieved as described above and displayed on a display screen. Retrieved route EB and supplementary route R2 are connected to each other, so that continuous route guidance can be displayed.

In this embodiment, in step S1504 in FIG. 13, it is determined whether or not to acquire the supplementary route information based on an instruction of the user. Alternatively, the supplementary route information may be automatically acquired when the current position P reaches the termination point E of the route.

In step S1502 in FIG. 13, it is determined whether or not the current position has reached the termination point E of the route. Alternatively, it may be determined whether or not the distance to the termination point E has become equal to or less than a predetermined value.

In step S1502 in FIG. 13, it may be determined as shown in FIG. 16 whether or not distance Lc from the current position to the branching point C on the route which is before, and closest to, the termination point E of the route has become equal to or less than a predetermined value.

By determining whether or not distance Lc to the branching point C on the route has become equal to or less than the predetermined value, in the case where there is no route to destination T in the vicinity of the termination point E of the route, the vehicle can be guided so as to turn left at the branching point C and efficiently reach the destination T via point A without running to the termination point E of the route, as shown in the display example of the supplementary route in FIG. 16.

### (Third Embodiment)

A route guidance device according to a third embodiment of the present invention will be described.

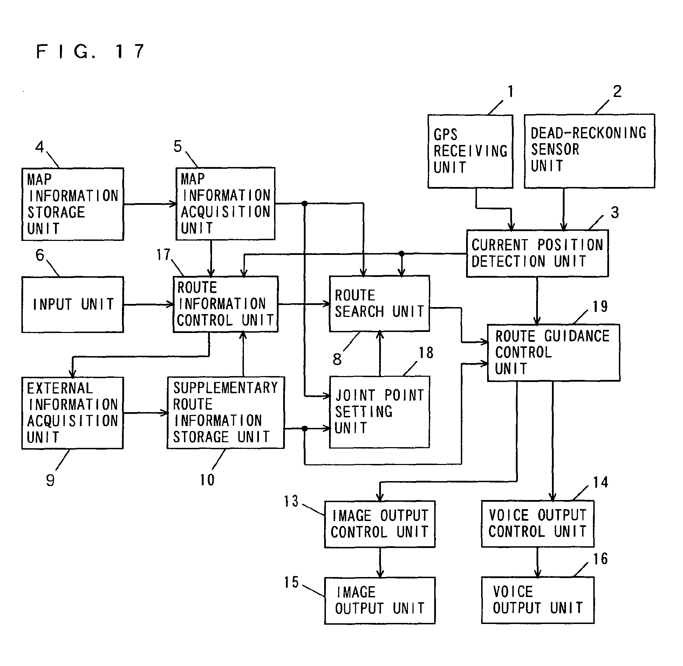

FIG. 17 is a functional block diagram of the route guidance device according to the third embodiment of the present invention. Identical elements to those in the second embodiment bear identical reference numerals thereto and descriptions thereof will be omitted.

With the route guidance device according to this embodiment, the supplementary route information acquired by the external information acquisition unit 9 includes route information to the destination by voice or a map. A difference from the first embodiment is that a route guidance control unit 19 in the route guidance device according to this embodiment, when executing route guidance by the supplementary route information, causes the voice output unit 16 to output a voice guidance to the destination acquired as electronic data, or causes the image output unit 15 to display a guide map acquired as electronic data.

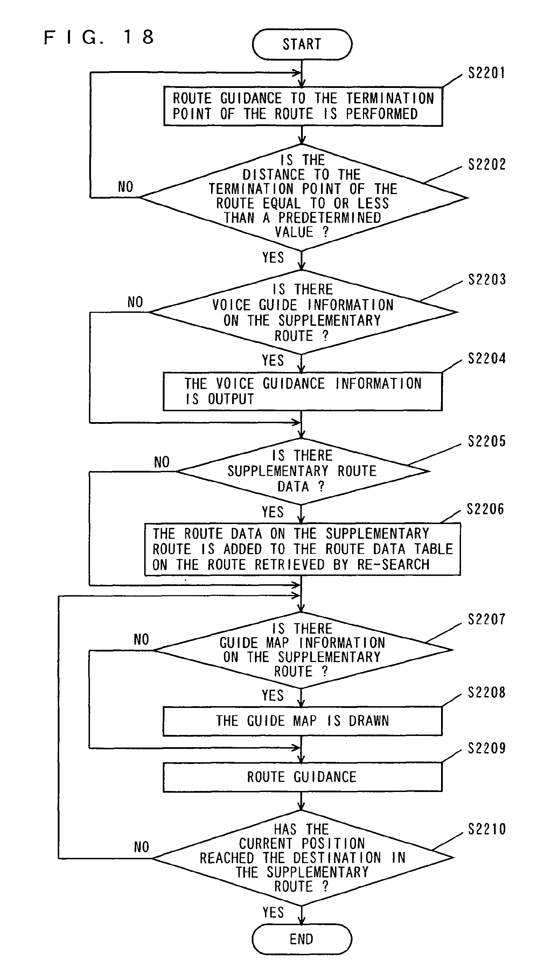

FIG. 18 is a flowchart illustrating route guidance performed by the route guidance device according to the third embodiment. FIG. 18 shows route guidance performed along a route retrieved by re-search after the supplementary route information is acquired and the joint point setting is performed.

The operation in FIG. 18 is performed after step S1507 in the flowchart in the second embodiment shown in FIG. 13.

Referring to FIG. 18, until the current position reaches the termination point E, the route guidance control unit 19 executes the usual route guidance (S2201). The definition of the termination point of the route is described in the second embodiment and will be omitted here.

Next, the route guidance control unit 19 determines whether or not the distance between the current position and the termination point of the route is equal or less than a predetermined value based on the output from the current position detection unit 3 and the output from the route search unit 8 (S2202). When the distance between the current position and the termination point of the route is not equal to or less than the predetermined value (NO in S2202), the route guidance control unit 19 continues the route guidance. When the distance between the current position and the termination point of the route is equal to or less than the predetermined value (YES in S2202), the route guidance control unit 19 determines whether or not the supplementary route information stored in the supplementary route information storage unit 10 includes voice guidance information (S2203). When the supplementary route information does not include the voice guidance information (NO in S2203), the route guidance control unit 19 advances the processing to step S2205. When the supplementary route information includes the voice guidance information (YES in S2203), the route guidance control unit 19 causes the voice output control unit 14 to output the voice guidance information (52204).

The voice output control unit 14 converts the acquired digital voice signal into an analog signal, amplifies the analog signal, and then causes the voice output unit 16 such as a speaker or the like to output the signal. The voice guidance information is a guidance such as, for example, "Please the proceed as follows to XXX. Advance northward from the sign of entrance to YYY, and go about 100 meters along the way. Turn right at the end of the road. The destination is 30 meters away."

Next, the route information control unit 17 determines whether or not there is route data on the supplementary route (S2205). When there is no route data on the supplementary route (NO in S2205), the route information control unit 17 advances the processing to step S2207. When there is the route data on the supplementary route (YES in S2205), the route information control unit 17 adds the route data on the acquired supplementary route to the data table on the route retrieved by re-search (S2206).

Then, the route information control unit 17 determines whether or not there is guide map information on the supplementary route (S2207). When there is no guide map information on the supplementary route (NO in S2207), the processing is advanced to step S2209. When there is the guide map information on the supplementary route (YES in S2207), the guide map is drawn on the map screen at a predetermined timing (S2208).

In step S2208, in order to display the acquired guide map information as being superimposed on the screen currently displayed, the image output control unit 13 first determines the scale of the guide map information based on a reference coordinate set included in the guide map information (for example, the coordinate sets of the start point of the route and the destination, or the coordinate sets of the points diagonally located thereto) and the scale of the current display.

Then, the image output control unit 13 optionally determines the rotation angle of the guide map such that the orientation data included in the guide map information matches the orientation of the current display. The timing for drawing the guide map is matched to the repeated timing for updating the map screen.

By superimposing the guide map on the map screen, a mark indicating the position of the vehicle is displayed as running on the road in the guide map when the vehicle is running along the supplementary route.

When the route data on the supplementary route is added to the data table on the route retrieved by the re-search, the route guidance control unit 19 performs route guidance for the supplementary route in substantially the same manner as the usual route guidance until the vehicle reaches the destination T; for example, provides voice guidance to turn left before the branching point C (S2209).

The method of displaying the guide map information as being superimposed on the map screen by scaling the guide map so as to match the current scale is described above. Alternatively, for example, after the vehicle reaches the start point of the supplementary route, only the guide map may be displayed on the screen separately from the map display.

Next, the route guidance control unit 19 determines whether or not the current position has reached the destination in the supplementary route (S2210). When the current position has not reached the termination point of the supplementary route, i.e., the destination (NO in S2210), the processing returns to step S2207 and the route guidance by the map screen and the voice is repeated. When the current position has reached the termination point of the supplementary route, i.e., the destination (YES in S2210), the route guidance is terminated.

### INDUSTRIAL APPLICABILITY

As described above, a route guidance device according to the present invention provides the effect that, even when the road data possessed by the route guidance device cannot set a route to the destination, acquires route information to the destination (supplementary route information) from outside, searches for a route which is continuous from the acquired route, and thus can perform continuous route guidance to the destination. The present invention is useful for a navigation device for performing route guidance.

## Claims

1. A route guidance device, comprising:
map information storage means having map information stored therein;
supplementary route information storage means for storing supplementary route information which represents a route to a destination and which is not included in the map information;
supplementary route information acquisition means for acquiring the supplementary route information from the supplementary route information storage means;
joint point setting means for setting a coordinate set which is close to a start point coordinate set of the route included in the supplementary route information and is on a road included in the map information as a termination point of a route to be retrieved based on the map information stored in the map information storage means;
route search means for searching for a route to the termination point set by the joint point setting means based on the map information; and
route guidance control means for performing route guidance based on the route retrieved by the route search means and performing route guidance based on the supplementary route information acquired by the supplementary route information acquisition means.

2. A route guidance device according to claim 1, further comprising current position detection means for detecting a current position;
wherein the supplementary route information acquisition means acquires the supplementary route information when the current position detected by the current position detection means fulfills a predetermined condition.

3. A route guidance device according to claim 2, wherein the predetermined condition is that the current position reaches a point within a predetermined distance from the termination point of the route along which guidance is being performed.

4. A route guidance device according to claim 2, wherein the predetermined condition is that the current position reaches a point within a predetermined distance from a branching point close to the termination point of the route along which guidance is being performed.

5. A route guidance device according to claim 1, further comprising external information acquisition means for acquiring supplementary route information to the destination which is possessed by an external device;
wherein the supplementary route information storage means stores the supplementary route information acquired by the external information acquisition means.

6. A route guidance device according to claim 5, wherein the external information acquisition means acquires the supplementary route information from an external device which is at least one of a network server, a telephone terminal and an external storage medium.

7. A route guidance device according to claim 1, wherein the supplementary route information includes at least data on the start point coordinate set and road information including a node and a link to the start point to the destination.

8. A route guidance device according to claim 1, wherein the supplementary route information includes at least data on the start point coordinate set and voice guidance information from the start point to the destination.

9. A route guidance device according to claim 1, wherein the supplementary route information includes at least data on the start point coordinate set and guide map information from the start point to the destination.
